Europäisches Patentamt

European Patent Office

Office européen des brevets

(19)

(11) Veröffentlichungsnummer : **0 141 155 B1**

## (12) EUROPÄISCHE PATENTSCHRIFT

(45) Veröffentlichungstag der Patentschrift :
30.12.86

(21) Anmeldenummer : 84110608.1

(22) Anmeldetag : 06.09.84

(51) Int. Cl.⁴ : **B 65 G 65/46**

(54) **Bunkerabzugsvorrichtung.**

(30) Priorität : 10.09.83 DE 3332703

(43) Veröffentlichungstag der Anmeldung :
15.05.85 Patentblatt 85/20

(45) Bekanntmachung des Hinweises auf die Patenterteilung : 30.12.86 Patentblatt 86/52

(84) Benannte Vertragsstaaten :
AT BE CH DE FR GB LI NL SE

(56) Entgegenhaltungen :
AT-B-  322 443
US-A- 3 785 512

(73) Patentinhaber : Schwäbische Hüttenwerke Gesellschaft mit beschränkter Haftung
Wilhelmstrasse 67 Postfach 3280
D-7080 Aalen-Wasseralfingen (DE)

(72) Erfinder : Gessler, Hans
Gartenstrasse 94
D-7080 Aalen (DE)

(74) Vertreter : Jackisch, Walter, Dipl.-Ing. et al
Menzelstrasse 40
D-7000 Stuttgart 1 (DE)

## Beschreibung

Die Erfindung betrifft eine Bunkerabzugsvorrichtung nach dem Oberbegriff des Anspruches 1.

Eine derartige Bunkerabzugsvorrichtung ist aus der AT-B-322 443 bekannt.

Bunker für schwer- und nichtfließende Schüttgüter können nicht mit Konus- oder Schrägböden, sondern ausschließlich mit ebenen Böden ausgeführt werden, so daß die Entnahme des Schüttgutes über die Ausfallöffnung erfolgt, die bei der bekannten Vorrichtung gemäß obiger Druckschrift als im Bunkerboden eingelassene Förderkanäle ausgeführt ist. Der lichte Querschnitt der Ausfallöffnung ist durch das Förderorgan bestimmt ; sie kann daher nicht beliebig groß gewählt werden. Der lichte Querschnitt der Ausfallöffnung kann deshalb nicht so groß dimensioniert werden, daß eine standfeste Brettbildung des Schüttgutes oberhalb der Ausfallöffnung und des Förderschachtes verhindert wird. In diesem Fall ist ein kontrollierter Schüttgutabzug nicht mehr möglich.

Zu einer Bildung von Schüttgutbrettern über dem Ausfallschacht kann es besonders nach Stillständen kommen, wenn sich die im Schüttgut enthaltenen großflächigen und bandförmigen Teile in vielen Lagen sperrholzartig übereinanderschichten und nach Art einer diffusen Armierung die kleinen, im Schüttgut enthaltenen Teilchen fest zusammenhalten. In solchen Fällen müssen die Bunker dann von Hand geräumt werden, was aufwendig und zeitraubend ist.

Der Erfindung liegt die Aufgabe zugrunde, eine Abzugsvorrichtung der genannten Art so auszubilden, daß die Blockade von Bunkern entweder verhindert oder auf mechanische Weise — ohne Personaleinsatz — beseitigt werden kann.

Diese Aufgabe wird erfindungsgemäß mit den kennzeichnenden Merkmalen des Anspruches 1 gelöst.

Infolge der erfindungsgemäßen Ausbildung kann das Förderorgan immer dann angehoben werden, wenn es oberhalb der Ausfallöffnung zur Blockade durch Bildung von Schüttgutbrettern im Bunker kommt. Hierdurch werden Schüttgutbretter im Bereich der Auslaßöffnung erfaßt und zerstört, so daß die Auslaßöffnung für nachdrängendes Schüttgut freigehalten wird. Dadurch kann ein kontinuierlicher Schüttgutabzug sichergestellt werden.

Die Brettbildung kann vermieden werden, wenn die Hubbewegung des Förderorgans noch vor einer Totalblockade erfolgt, z. B. durch zeitgesteuerte, intermittierende Betätigung oder durch Steuerung über einen von der elektrischen Leitungsaufnahme des das Förderorgan antreibenden Aggregats beeinflußten Regelkreis, der die Hubbewegung einschaltet, wenn infolge zu geringer Belastung des Förderorgans die elektrische Leistungsaufnahme seines Antriebsaggregats unter einen kritischen Wert absinkt.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt :

Figur 1 eine erfindungsgemäße Vorrichtung, die an einem Boden eines Bunkers angeordnet ist, in Seitenansicht,

Figur 2 die Vorrichtung nach Fig. 1 in Ansicht gemäß Pfeil II in Fig. 1,

Figur 3 ein Schaltbild eines Hydrauliksystems der Vorrichtung nach den Fig. 1 und 2,

Figuren 4 und 5 eine zweite Ausführungsform einer erfindungsgemäßen Vorrichtung in einer Darstellung entsprechend den Fig. 1 und 2,

Figur 6 eine dritte Ausführungsform einer erfindungsgemäßen Vorrichtung in einer Darstellung entsprechend Fig. 1,

Figur 7 einen Schnitt längs der Linie VII-VII in Fig. 6 und

Figur 8 einen Schnitt längs der Linie VIII-VIII in Fig. 6.

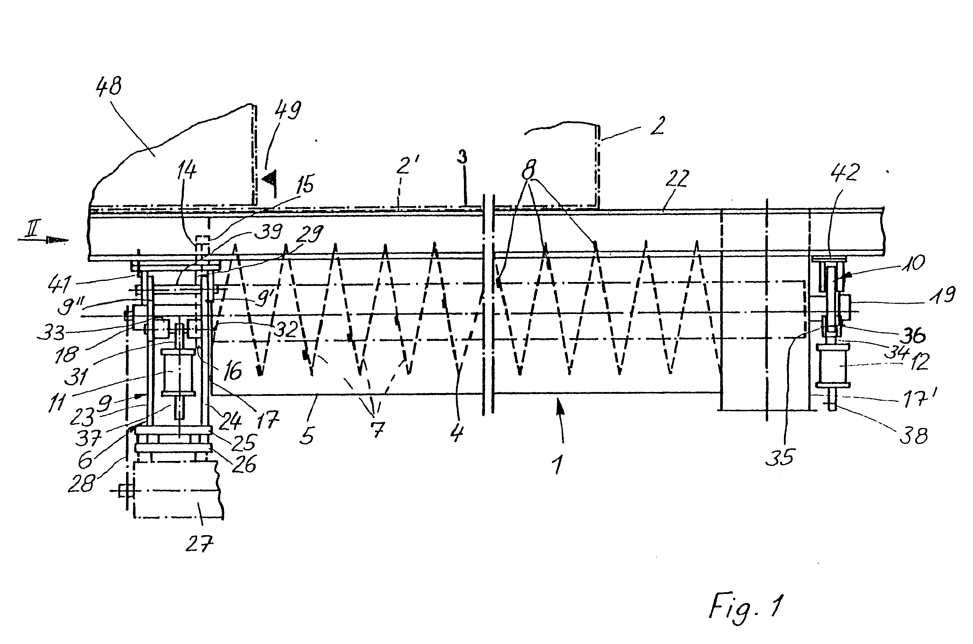

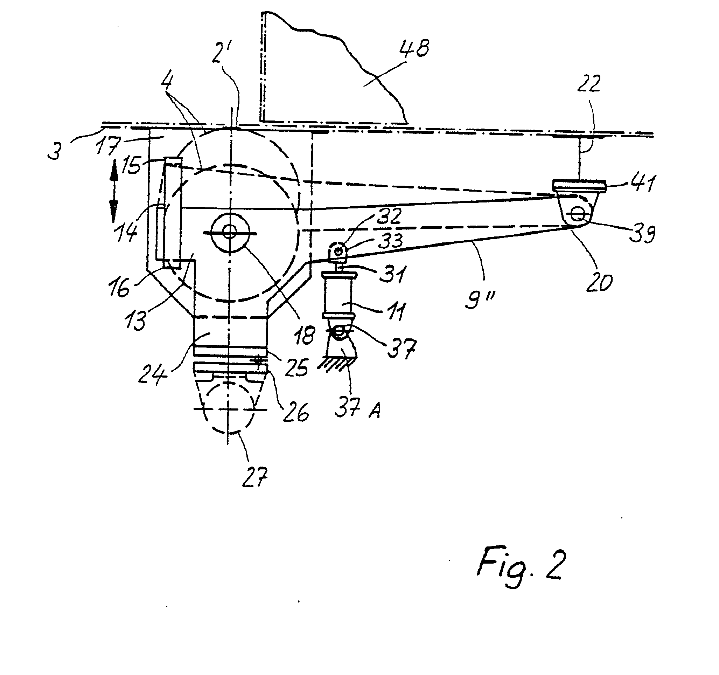

Die erfindungsgemäße Abzugsvorrichtung 1 nach den Fig. 1 und 2 dient zum Abziehen von nichtfließendem oder schwerfließendem Schüttgut aus einem Bunker 2, das einen hohen Anteil langfaseriger, großflächiger Partikel, wie Plastiktaschen, Plastiksäcke, Textilien, Schnüre, Bänder, Drähte, Küchenabfälle, zerkleinerte Haushaltsgegenstände und ähnliche Abfälle enthält. Die Vorrichtung 1 ist unterhalb eines ebenen Bunkerbodens 3 angeordnet. Sie besteht im wesentlichen aus einem als Schnecke 4 ausgebildeten Förderorgan, das innerhalb eines Förderkanals 5 liegt, und aus einer Hubeinrichtung 6 zum Anheben der Schnecke 4 bis in Höhe einer schlitzförmigen Auslaßöffnung 2' im Bunkerboden 3. Der Durchlaßquerschnitt dieser Auslaßöffnung 2' ist an die Abmessungen der Schnecke 4 angepaßt. Auch bei großem Schneckendurchmesser reicht der Durchlaßquerschnitt — besonders nach Stillständen — oft nicht aus, um zu verhindern, daß sich die im Schüttgut enthaltenen großflächigen und bandförmigen Teile in vielen Lagen sperrholzartig übereinanderschichten und nach Art einer diffusen Armierung die kleineren Partikel festhalten. Dadurch kann es oberhalb der Auslaßöffnung 2' zur Bildung standhafter Schüttgutbretter kommen. Um eine Blockade des Bunkers infolge dieser Brettbildung zu verhindern bzw. zu beseitigen und dadurch einen kontrollierten Abzug des Schüttgutes aus dem Bunker 2 zu gewährleisten, wird die Schnecke 4 mit der Hubeinrichtung 6 so angehoben, daß sie mit ihren radial äußeren Abschnitten 7, 8 bis über den Bunkerboden 3 reicht. Die äußeren Abschnitte der Schnecke 4 sind durch ihre Schneckenflügel 7 gebildet, die mit zahnartig ausgebildeten Aufreißern 8 bestückt sind, mit denen das Schüttgut oder hieraus gebildete Schüttgutbretter aufgerissen und zerstört werden können. Dadurch wird die Ausfallöffnung 2' bei einer Blockade freigefräst. Die Hubeinrichtung 6 weist an den beiden Stirnseiten 17, 17' des Förderkanals 5 angeordnete Schwenkarme 9, 10 auf, die Träger bilden. Der in Fig. 1 linke Schwenkarm 9 besteht aus zwei gleichen Stahlplatten 9' und 9" mit nach unten ragenden Ansätzen 23, 24. Diese sind über eine Platte 25 miteinander verbunden. An der Unterseite der Platte 25 ist eine als Wippe ausgebildete Grundplatte 26 angelenkt, die ein Antriebsaggregat 27 trägt und mit der die Spannung eines als Rollenkette oder Riementrieb ausgebildeten Antriebsgliedes 28 einstellbar ist.

Der in Fig. 1 rechts dargestellte Schwenkarm 10 besteht aus einer länglichen Stahlplatte, die gleich ausgebildet ist wie die Stahlplatten 9' und 9" des doppelarmigen Schwenkarmes 9. Beide Schwenkarme 9, 10 stellen einarmige Hebel mit einem Drehpunkt, einem Lastangriffspunkt und einem Kraftangriffspunkt dar.

Fig. 2 zeigt die linke Stahlplatte 9", deren rechtes Ende 20 mit einem Bolzen 39 in einem Lagerbock 41 schwenkbar gelagert ist. Eine Grundplatte 42 des Lagerbocks 41 ist an einem Profilträger 22 befestigt, der mit dem Bunkerboden 3 fest verbunden ist.

Die in Fig. 1, 2 dargestellten Schwenkarme tragen an den den drehbar gelagerten Enden 20 gegenüberliegenden Enden 13 je ein Lagergehäuse 18, 19 mit (nicht dargestellten) Pendelwälzlagern, in denen die stirnseitigen Lagerzapfen der Schnecke 4 gelagert sind. Zwischen dem Drehpunkt (Achsenbolzen 39) des Schwenkarmes 9 und den Wellenenden 18, 19 sind die Hubzylinder 11, 12 angeordnet, deren Kolbenstangen 31, 34 durch Gabeln 33, 35 und Bolzen 32, 36 mit den Schwenkarmen gelenkig verbunden sind. Die unteren Zylinderseiten besitzen je ein Auge 37, 38 mit einem durchgesteckten Bolzen, der in einem zum Bunkerboden 3 ortsfesten, gabelförmigen Lagerbock 37A schwenkbar gelagert ist.

Die Enden 13 der Schwenkarme 9, 10 sind in Gabeln 14 als Halterung geführt, die fest mit den Stirnseiten 17, 17' des Förderkanals 5 verbunden sind. Die Gabeln 14 ermöglichen die Vertikalbewegung der Schwenkarme 9, 10, wobei die Schubkräfte der Schnecke 4 aufgenommen und die Hubbewegung der Schwenkarme 9, 10 nach oben und unten durch Anschläge 15, 16 begrenzt wird. Im Ausführungsbeispiel ist die Höhe des Gabelschlitzes 29 etwa gleich der doppelten Breite des Armendes 13.

Wie die Fig. 1 und 2 zeigen, liegen die Lagergehäuse 18, 19 der Schnecke 4 relativ dicht benachbart zu den Armenden 13 und etwa in halber Breite der Ansätze 23, 24 der Träger 9', 9" des Schwenkarmes 9. Von den Anlenkpunkten der Hubzylinder 11, 12 an die Schwenkarme 9, 10 haben die Wellenenden 18, 19 einen Abstand, der kleiner ist als der Abstand zwischen dem Hydraulikkolben-Anlenkpunkt und der Achse der Bolzen 39, so daß die Kraft zum Heben der Schnecke entsprechend gering ist.

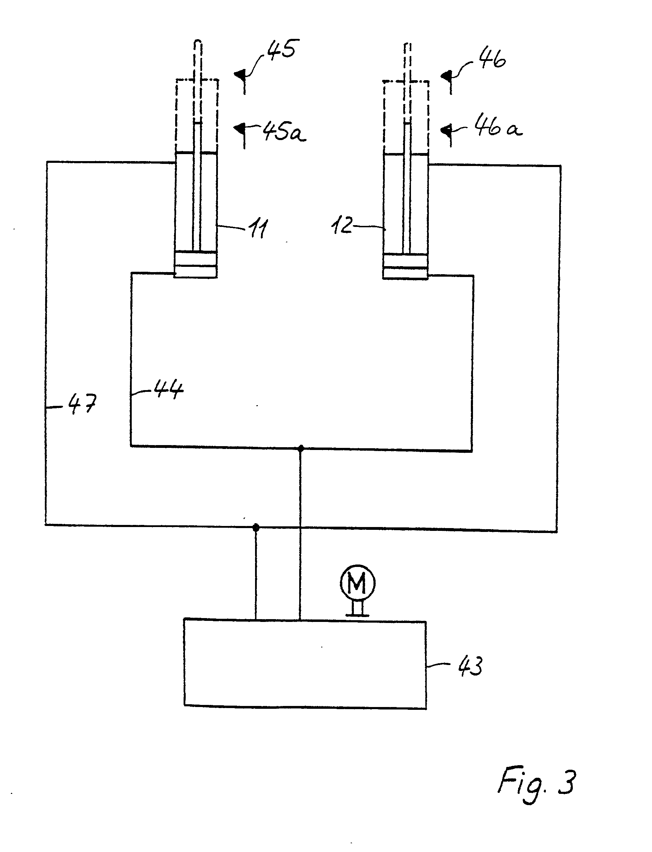

Durch Betätigen der Hubzylinder 11, 12, die Hydraulik- oder Pneumatik-Zylinder sein können oder auch elektromotorisch betätigt werden können, wird die Schnecke 4 oszillierend zwischen ihrer angehobenen oberen Stellung (strichpunktierte Linie in Fig. 2) und ihrer unteren, abgesenkten Stellung (gestrichelte Linie in Fig. 2) bewegt. Im Ausführungsbeispiel sind die Hubzylinder 11, 12 Hydraulikzylinder, die über die in Fig. 3 schematisch dargestellte Steuerschaltung mit einem Hydraulikaggregat 43, mit einer Pumpe M und mit einem (nicht dargestellten) Steuerventil verbunden sind. Bei einer einfachen Ausführungsform erfolgt das Heben und Senken der Schnecke 4 dadurch, daß durch Betätigen eines (nicht dargestellten) Schalters die Pumpe M eingeschaltet und gleichzeitig das Steuerventil des Hydraulikaggregates 43 so gesteuert wird, daß ein erster Hydraulikkreis 44 geschlossen wird. Dadurch werden die Kolbenstangen 31, 34 der Hubzylinder 11, 12 ausgefahren und dadurch die Schwenkarme 9, 10 bis in ihre obere Endstellung nach oben verschwenkt. In dieser Stellung sind die Hubzylinder 11, 12 mit einem in Fig. 3 bei 45 und 46 angedeuteten Kontakt in Berührung, während die Schwenkarme 9, 10 mit ihren Enden 13 am oberen Anschlag 15 der Gabel 14 anliegen. Der Schalter bleibt so lange eingeschaltet, bis das Schüttgut aufgerissen bzw. die Schüttgutbretter zerstört und dadurch die Ausfallöffnung 2' freigefahren sind. Anschließend wird der Schalter und damit die Pumpe M ausgeschaltet, wodurch ein zweiter Hydraulikkreis 47 (Fig. 3) geschlossen, die Kolbenstangen 31, 34 der Hubzylinder 11, 12 eingefahren und die Schwenkarme 9, 10 bis in ihre untere Endlage nach Fig. 2 (gestrichelte Linie) abgesenkt werden und dort mit unteren Kontakten 45a und 46a in Berührung stehen.

Die Schnecke 4 ist vorteilhaft über eine (nicht dargestellte) Steuerschaltung mit einem um die Bunkerachse rotierenden Rührwerksarm 48 verbunden. Diese Steuerschaltung ist so gewählt, daß die Betätigung der Hubeinrichtung 6 nur dann möglich ist, wenn der Rührwerksarm 48 eine solche Lage hat, daß eine Kollision zwischen ihm und der angehobenen Schnecke 4 ausgeschlossen ist. In Fig. 1 ist bei 49 schematisch eine zusätzliche Verriegelung dargestellt, mit der die Rotationsbewegung des Rührwerksarmes 48 unterbrochen werden kann, wenn die Schnecke 4 ihre oberste Lage erreicht hat und die erst in der unteren Lage der Schnecke wieder eingeschaltet werden kann. Der Rührwerksarm 48 kann beispielsweise auch eine Räumschnecke oder ein Fräsarm sein.

Anstelle der manuellen Schaltbetätigung kann die oszillierende Hubbewegung der Schnecke 4 auch über ein (nicht dargestelltes) Zeitschaltwerk gesteuert werden, das mit der Schnecke und dem Rührwerksarm 48 sowie der Pumpe M zum Betätigen der Hubzylinder 11, 12 elektrisch verbunden ist. Mit diesem Zeitschaltwerk kann die Ein- und Ausschaltung der Hubvorrichtung taktweise in bestimmten Zeitintervallen erfolgen.

Anstelle des Zeitschaltwerkes kann ferner ein (nicht dargestelltes) Leistungsmeßgerät vorgesehen sein, das die elektrische Leistung des Antriebsaggregats 27 mißt und die Hubeinrichtung 6 immer dann einschaltet, wenn die Schnecke einen minimalen Füllgrad und das Schneckenantriebsmoment und damit die elektrische Leistungsaufnahme einen bestimmten Wert unterschreiten. Dies ist dann immer der Fall, wenn durch Schüttgutbretter die Austrittsöffnung 2' des Bunkerbodens 3 blockiert ist, so daß kein Schüttgut in den Förderkanal 5 einfallen kann.

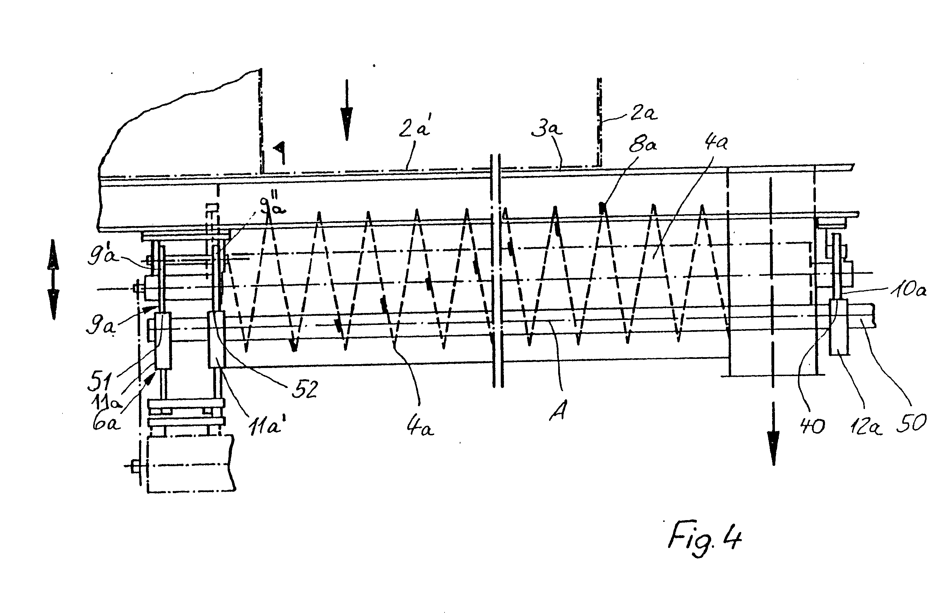

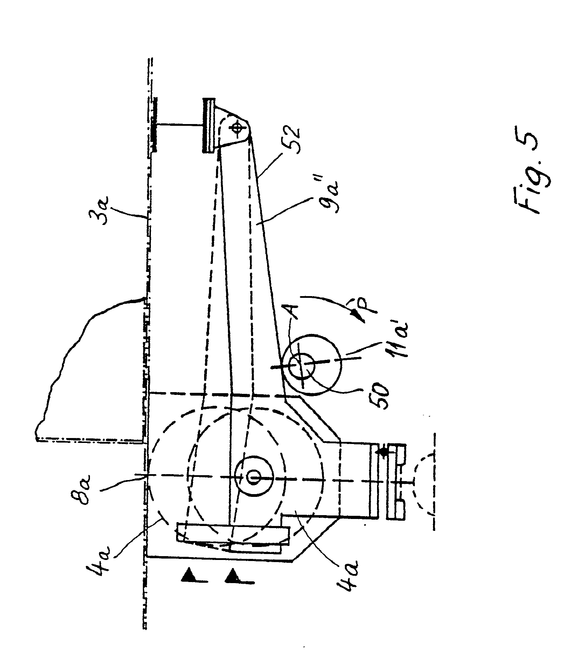

Die Ausführungsform nach den Fig. 4 und 5 unterscheidet sich von der zuvor beschriebenen Ausführungsform dadurch, daß anstelle der Hubzylinder 11, 12 Exzenterscheiben 11a, 11a' und 12a an dem Schwenkarm 9a bzw. seinen Stahlplatten 9a', 9a" und dem Schwenkarm 10a angreifen. Die Exzenterscheiben 11a, 11a', 12a sind jeweils gleich ausgebildet und auf einer gemeinsamen Welle 50 gelagert, die entsprechend den Hubzylindern 11, 12 von einer (nicht dargestellten) Bodenstütze getragen sind. Die Exzenterscheiben 11a, 11a', 12a sind geringfügig dicker als die Plattendicke der zugehörigen Stahlplatten 9a', 9a" des Schwenkarmes 9a und dicker als die Plattendicke des Schwenkarmes 10a, so daß die Umfangsflächen der Exzenterscheiben eine breite, sichere Auflagefläche für die unteren Längsränder 51, 52, 40 der Stahlplatten 9a, 9a" und des Schwenkarmes 10a bilden. Die Exzenterscheiben 11a, 11a', 12a liegen etwa mit gleichem Abstand von den Enden der Schwenkarme 9a, 10a wie die Hubzylinder 11, 12 gemäß Fig. 1 und 2.

Zum Anheben der Schwenkarme 9a und 10a werden die Exzenterscheiben 11a, 11a' und 12a aus ihrer unteren, in den Fig. 4 und 5 mit gestrichelten Linien dargestellten Endlage um 90° in Richtung des Pfeiles P verdreht. In der Ausgangsstellung haben die Längsränder 51, 52, 40 der Schwenkarme 9a, 10a von der Achse A der Exzenterwelle 50 einen minimalen Abstand. In der oberen Endstellung, die in Fig. 5 mit strichpunktierten Linien eingezeichnet ist, ragt die Schnecke 4a mit ihren radial äußeren Abschnitt 8a bis über den Bunkerboden 3a, so daß über der Ausfallöffnung 2a' liegende Schüttgutbretter wirksam aufgerissen und zerstört werden können. Sobald die Ausfallöffnung auf diese Weise vollständig freigelegt worden ist, werden die Exzenterscheiben 11a, 11a' und 12a in Pfeilrichtung P weitergedreht, bis sie wieder ihre Ausgangslage nach Fig. 5 haben und die Schwenkarme 9a, 10a sowie die Schnecke 4a ihre unterste Lage einnehmen.

Die Hubeinrichtung 6a kann entsprechend wie bei der Ausführungsform nach den Fig. 1 bis 3 entweder von Hand oder automatisch über ein Zeitschaltwerk oder ein Leistungsmeßgerät gesteuert werden.

Anstelle der Exzenterscheiben 11a, 11a', 12a kann auch ein (nicht dargestellter) Kniehebel oder eine nicht dargestellte, an einer Welle befestigte Pleuelstange vorgesehen sein, mit denen die Schnecke durch Verschwenken des Kniehebels bzw. durch Drehen der Welle der Pleuelstange in gleicher Weise angehoben und anschließend wieder abgesenkt werden kann.

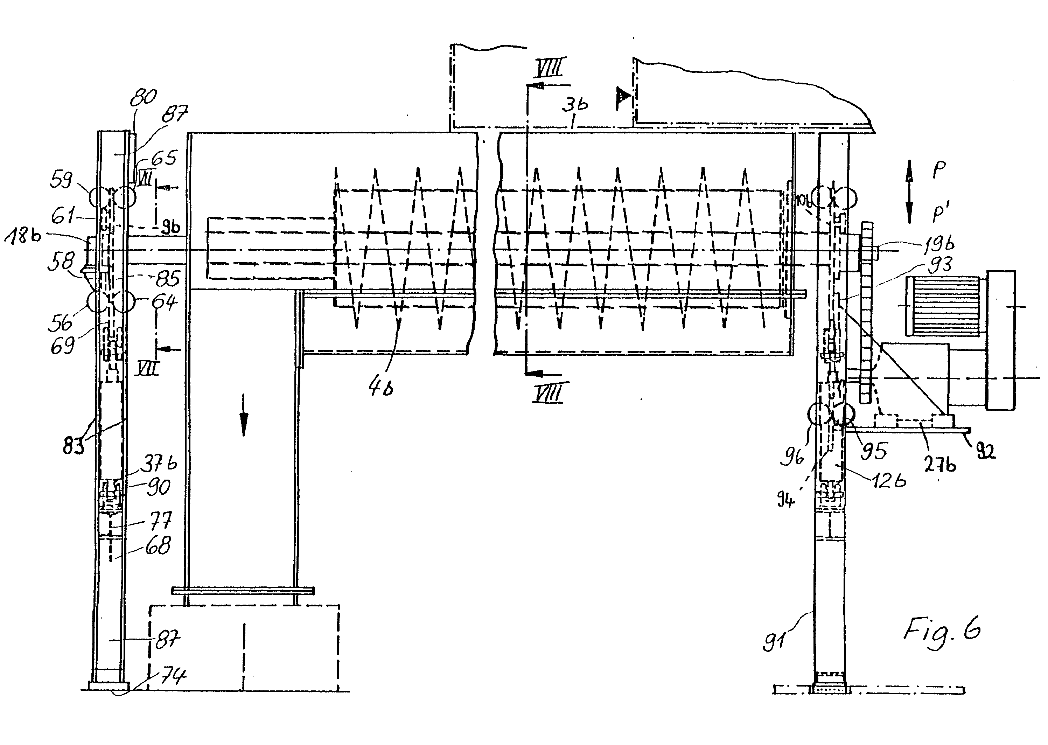

Bei der Ausführungsform nach den Fig. 6 bis 8 sind die Wellenenden 18b, 19b der Schnecke 4b in vertikal verfahrbaren Schlitten 9b, 10b gelagert, die anstelle der Schwenkarme 9, 9a bzw. 10, 10a gemäß den Fig. 1, 2 bzw. 4, 5 als Träger vorgesehen sind.

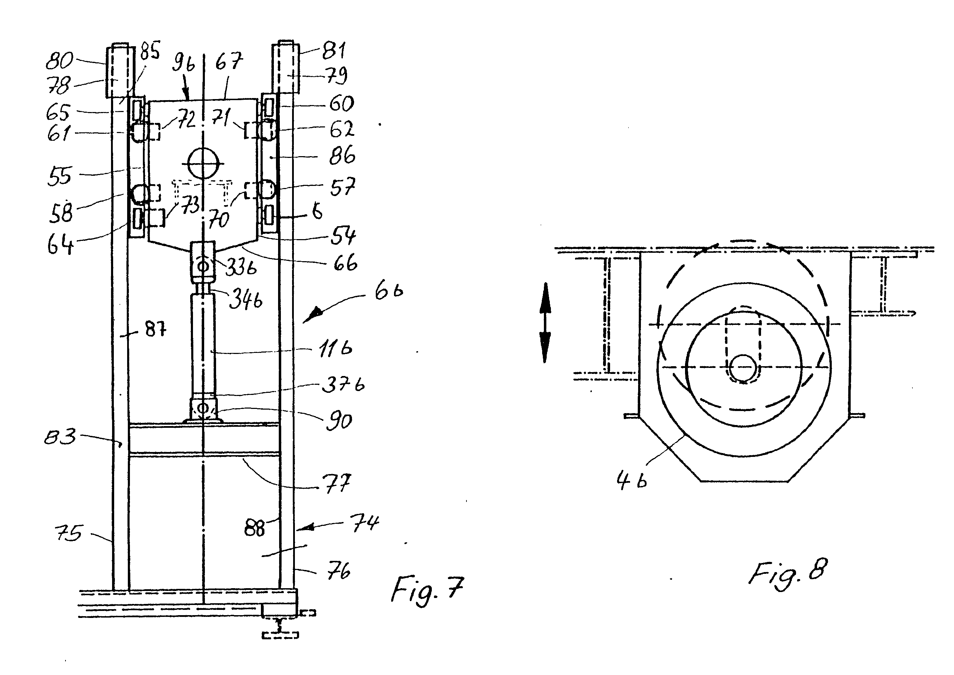

Wie insbesondere Fig. 7 zeigt, bestehen die Schlitten 9b aus etwa rechteckigen, vertikal angeordneten Platten mit einem unteren, etwa V-förmig verlaufenden Rand 66. Die Schlitten weisen an ihren Längsrändern 54, 55 mehrere Übereinander angeordnete Laufrollen 56 bis 65 auf. Benachbart zum unteren und einem oberen Rand 66 und 67 sind jeweils zwei Rollenpaare 56, 64, 63 und 59, 65, 60 angeordnet, deren Achsen parallel zur Plattenebene 9b verlaufen. Von den Rollen sind die in Fig. 6 hinter den Rollen 56 und 59 liegenden Rollen in den Zeichnungen nicht dargestellt. Benachbart zu und zwischen diesen Rollenpaaren liegt jeweils eine Rolle 57, 58 bzw. 61, 62, deren Achsen senkrecht zur Plattenebene liegen. Diese Laufrollen 57, 58 ; 61, 62 sind an der von der Schnecke 4b abgewandten Plattenseite 69 (Fig. 6) über Haltelaschen 70 bis 73 (Fig. 7) befestigt. Mit den Laufrollen 56 bis 65 ist der Schlitten 9b in einer Stütze 74 der Hubeinrichtung 6b vertikal verfahrbar und einwandfrei gegenüber dieser sowie der Schnecke 4b ausgerichtet. Die Stütze 74 besteht aus zwei mit Abstand nebeneinander angeordneten und im Querschnitt jeweils U-förmigen Stützen 75 und 76, die über eine in der unteren Hälfte angeordnete Querstrebe 77 miteinander verbunden sind. Die Stützen 75, 76 erstrecken sich nahezu bis in Höhe des Bunkerbodens 3b und weisen an ihren Enden 78, 79 Halteteile 80, 81 auf, die als Festanschläge für die Laufrollen dienen. Sie sind an den von der Schneckenachse abgewandten Schenkeln 83, 84 der Längsstreben 75, 76 befestigt. Mit den Doppellaufrollen 56, 64 ; 59, 65 und 60, 63 ist der Schlitten 9b in seiner vertikalen Lage gegenüber der Stütze 74 ausgerichtet. Sie laufen beim Heben und Senken des Schlittens 9b an Leisten 85, 86, die zwischen den Laufrollen liegen und an den Querstegen 87, 88 der Stützen 75, 76 befestigt sind. Die Leisten 85, 86 haben etwa gleiche Länge wie die Längsränder 54, 56 des Schlittens 9b und schließen unmittelbar unterhalb der Halteteile 80, 81 an. Mit den anderen Laufrollen 57, 58, 61, 62 ist der Schlitten 9b auf den Querstegen 87, 88 abgestützt. Über die Laufrollen 56 bis 65 ist der Schlitten 9b bei seiner Aufwärts- bzw. Abwärtsbewegung vertikal und in Richtung der Schneckenachse geführt. Hierzu können die Rollenpaare in bekannter Weise in Prismen-, Rund- oder Flachführungen laufen. Je nach Anordnung werden die beiden Führungsebenen durch separate, doppelte Rollenpaare oder durch gemeinsame, einfache Rollenpaare gebildet.

Am unteren Rand 66 des Schlittens 9b ist die Kolbenstange 34b des Hubzylinders 11b, der ein Hydraulikzylinder ist, über das Lagerstück 33b angelenkt. Das untere Zylinderende 37b ist in einer auf der Querstrebe 77 befestigten Halterung 90 gehalten.

Der andere Schlitten 10b ist entsprechend ausgebildet wie der Schlitten 9b und wie dieser mit einem Hubzylinder 12b verbunden und vertikal verfahrbar in einer zugehörigen Stütze 91 geführt. Die Stütze 91 und der Hubzylinder 12b sind ebenfalls gleich ausgebildet wie die Stütze 74 und der Hubzylinder 11b. Das in einer Lageröffnung des Schlittens 12b liegende Wellenende 19b der Schnecke 4b ist mit dem Schneckenantrieb 27b verbunden. Der Schneckenantrieb ist auf einem Tragstück 92 befestigt, das an einem oberen Ende 93 am Schlitten 10b befestigt ist und an seinem unteren Ende 94 mit um horizontale Achsen drehbaren Laufrollen 95, 96 an der Stütze 91 geführt ist. Der als Stirnradgetriebe mit Kettenrad-Vorgelege ausgebildete Schneckenantrieb 27b sitzt auf einer Konsole, die fest mit dem Schlitten 10b verbunden ist, so daß der Antrieb gleiche Oszillierbewegung wie die Schnecke ausführt. Beim Betätigen der Hubzylinder 11b, 12b werden die Schlitten 9b, 10b in Pfeilrichtung P nach oben bis zur Anlage an den Halteteilen 80, 81 gefahren, in der die Schnecke 4b die mit gestrichelten Linien dargestellte Lage in Fig. 8 einnimmt. Beim Absenken der Hubzylinder 11b, 12b bewegen sich diese in entgegengesetzter Richtung (Pfeil P') nach unten bis in die in den Fig. 6 und 7 dargestellte Endlage. Diese Lage ist in Fig. 8 durch ausgezogene Linien gekennzeichnet.

Wie bei den zuvor beschriebenen Ausführungsbeispielen kann die Hubvorrichtung 6b, die aus Schlitten 9b, 10b und den Hubzylindern 11b, 12b besteht, entweder von Hand oder automatisch über ein Zeitschaltwerk oder ein Leistungsmeßgerät leistungsabhängig gesteuert werden.

**Patentansprüche**

1. Bunkerabzugsvorrichtung (1) für schwer- und nichtfließende Schüttgüter, wie z. B. Müll mit einem kritischen Anteil an langfaserigen, großflächigen Partikeln, wie Plastiktaschen, Plastiksäcken, Textilien, Schnüren, Bändern, Drähten, Küchenabfällen, zerkleinerten Haushaltsgegenständen und dergleichen, mit einem Förderorgan, insbesondere einer horizontal verlaufenden Förderschnecke, die in einem Förderkanal (5) liegt, und mit einer Auslaßöffnung (2', 2a), durch die die Schüttgüter aus dem Bunker (2, 2a) zum Förderorgan gelangen, dadurch gekennzeichnet, daß das Förderorgan (4, 4a, 4b) höhenbeweglich angeordnet ist, derart, daß es mindestens mit einem radial äußeren Abschnitt (7, 8, 8a) in den Bereich der Auslaßöffnung (2', 2a') eintauchbar ist.

2. Vorrichtung nach Anspruch 1, dadurch gekennzeichnet, daß das Förderorgan (4, 4a, 4b) mit einer Hubeinrichtung (6, 6a, 6b) verbunden ist, die vorzugsweise mindestens einen Träger (9, 10 ; 9a, 10a ; 9b, 10b) aufweist, an dem ein Hubglied (11, 11a, 11a', 11b ; 12, 12a, 12b), wie z. B. ein Hydraulik-Pneumatik-Zylinder, eine Exzenterscheibe, ein Kniehebel, eine Pleuelstange oder ein elektromechanisches Stellglied, angreift.

3. Vorrichtung nach Anspruch 2, dadurch gekennzeichnet, daß das Förderorgan (4, 4a, 4b) an seinen beiden Wellenenden (18, 18b, 19, 19b) mit jeweils einem der Träger (9, 10 ; 9a, 10a ; 9b, 10b) verbunden ist.

4. Vorrichtung nach Anspruch 2 oder 3, dadurch gekennzeichnet, daß der Träger (9, 10 ; 9a, 10a) ein Schwenkarm ist, der mit seinem einen Ende (13) in einer Halterung (14), vorzugsweise einer Gabel, schwenkbar gehalten ist, und daß das andere Ende (20) des Schwenkarmes (9, 9a ; 10, 10a) in einem mit dem Bunkerboden (3, 3a) verbundenen Lagerbock (41 ; 42) schwenkbar gelagert ist.

5. Vorrichtung nach Anspruch 4, dadurch gekennzeichnet, daß der Schwenkarm (9, 9a) an seinem vom Bunkerboden (3, 3a) abgewandten Ende ein Antriebsaggregat (27) trägt, das über ein Antriebsglied (28) mit der Schneckenachse (18) verbunden ist.

6. Vorrichtung nach einem der Ansprüche 2 bis 5, dadurch gekennzeichnet, daß das Hubglied (11, 11a) von der Achse eines Bolzens (39), mit dem die anderen Enden (20) der Träger in den Lagerböcken (41 ; 42) gelagert sind, größeren Abstand hat als von den Wellenenden (18, 18b ; 19, 19b).

7. Vorrichtung nach Anspruch 2, dadurch gekennzeichnet, daß die Träger (9b, 10b) als vertikal verfahrbare, vorzugsweise plattenartige Schlitten ausgebildet sind, die mit Laufrollenpaaren (54, 64, 59, 65, 60, 63) an vertikalen Stützen (75, 76) geführt sind, wobei die Achsen der Laufrollenpaare senkrecht zur Verschieberichtung (P, P') des Trägers (9b, 10b) liegen.

8. Vorrichtung nach Anspruch 7, dadurch gekennzeichnet, daß das Hubglied (11b ; 12b) mit einem Ende an dem Träger (9b, 10b) und mit dem anderen Ende an einer zum Bunkerboden (3, 3a) feststehenden Basis angelenkt ist.

9. Vorrichtung nach einem der Ansprüche 1 bis 8, dadurch gekennzeichnet, daß das Förderorgan (4, 4a, 4b) selbsttätig, wie beispielsweise über ein Zeitschaltwerk oder über einen Regelkreis, den die elektrische Leistungsaufnahme des Antriebsmotors für das Förderorgan beeinflußt, steuerbar ist.

10. Vorrichtung, bei der der Bunker ein um die Bunkerachse rotierendes Rührwerk, wie eine Räumschnecke, einen Fräser oder dergleichen, aufweist, nach einem der Ansprüche 1 bis 9, dadurch gekennzeichnet, daß die Hubbewegung des Förderorgans (4, 4a, 4b) derart steuerbar ist, daß es nur aus einer von einem Rührwerkarm (48) des Rührwerkes entfernten Stellung aus anhebbar ist, und daß das Förderorgan (4, 4a, 4b) vorzugsweise mit einer Verriegelung (49) zur Unterbrechung der Rotationsbewegung des Rührwerkarmes (48) in einer angehobenen Lage des Förderorgans verbunden ist.

**Claims**

1. Bunker-discharging device (1) for flow-resisting and non-flowing bulk materials, such as refuse with a critical proportion of long-fibered, large-area particles, such as plastic bags, plastic sacks, textiles, strings, bands, wires, kitchen wastes, size-reduced household objects and similar, with a conveyor element, particularly a horizontally extending conveyor worm, said conveyor worm being situated in a conveyor duct (5), and with an outlet opening (2', 2a), the bulk materials leaving the bunker (2, 2a) through said outlet opening to reach the conveyor element, characterized in that the conveyor element (4, 4a, 4b) is height-movably disposed, such that, at least with a radially outer section (7, 8, 8a), it is plungeable into the area of the outlet opening (2', 2a').

2. Device according to claim 1, characterized in that the conveyor element (4, 4a, 4b) is connected to a lifting apparatus (6, 6a, 6b), said lifting apparatus preferably comprising at least one bearer (9, 10 ; 9a, 10a ; 9b, 10b), said bearer being engaged by a lifting element (11, 11a, 11a', 11b ; 12, 12a, 12b), such as a hydraulic-pneumatic cylinder, an eccentric cam, a toggle lever, a connecting rod or an electromechanical actuator.

3. Device according to claim 2, characterized in that the conveyor element (4, 4a, 4b) is connected at each of its two shaft ends (18, 18b, 19, 19b) to one of the bearers (9, 10 ; 9a, 10a ; 9b, 10b).

4. Device according to claim 2 or 3, characterized in that the bearer (9, 10 ; 9a, 10a) is a swing-arm, said swing-arm being swivellably held by one end (13) in a mounting (14), preferably a fork, the other end (20) of the swing-arm (9, 9a ; 10, 10a) being swivellably held in a bearing block (41 ; 42), said bearing block being connected to the bunker bottom (3, 3a).

5. Device according to claim 4, characterized in that, at its end facing away from the bunker bottom (3, 3a), the swing-arm (9, 9a) bears a drive unit (27), said drive unit being connected via a drive element (28) to the worm shaft (18).

6. Device according to any one of claims 2 to 5, characterized in that the lifting element (11, 11a) is at a greater distance from the axis of a pin (39), said pin holding the other ends (20) of the bearers in the bearing blocks (41 ; 42), than from the shaft ends (18, 18b ; 19, 19b).

7. Device according to claim 2, characterized in that the bearers (9b, 10b) are in the form of vertically movable, preferably plate-like sleds, said sleds being guided with roller pairs (54, 64, 59, 65, 60, 63) on vertical supports (75, 76), the axes of the roller pairs being perpendicular to the direction of displacement (P, P') of the bearer (9b, 10b).

8. Device according to claim 7, characterized in that the lifting element (11b ; 12b) is swivel-connected by one end to the bearer (9b, 10b) and by the other end to a base, said base being fixed in relation to the bunker bottom (3, 3a).

9. Device according to any one of claims 1 to 8, characterized in that the conveyor element (4, 4a, 4b) is controllable automatically, for example by a timer or by a control loop, said control loop being influenced by the electrical power consumption of the drive motor for the conveyor element.

10. Device in which the bunker comprises an agitator rotating about the axis of the bunker, such as a clearing worm, a cutter or similar, according to any one of claims 1 to 9, characterized in that the lifting motion of the conveyor element (4, 4a, 4b) is controllable in such a way that said conveyor element can be raised only from a position remote from an agitator arm (48) of the agitator, the conveyor element (4, 4a, 4b) being connected preferably to an interlocking device (49) to interrupt the rotary motion of the agitator arm (48) when the conveyor element is in a raised position.

## Revendications

1. Dispositif d'extraction sous trémie (1) pour matériaux en vrac non ou peu fluides, comme, par exemple, des déchets présentant une part critique de particules volumineuses et à fibres longues telles que des poches et des sacs en plastique, des tissus, des ficelles, des cordons, des fils métalliques, des ordures ménagères, des objets domestiques broyés et équivalents, comportant, d'une part, un mécanisme de transport, en particulier une vis sans fin horizontale, située dans un canal de transport (5) et, d'autre part un orifice d'évacuation (2', 29) qui permet aux matériaux en vrac de passer de la trémie (2, 2a) au mécanisme de transport, caractérisé par le fait que le mécanisme de transport (4, 4a, 4b) est mobile en hauteur de telle sorte qu'il puisse être introduit au moins avec une partie extérieure radiale (7, 8, 8a) au niveau de l'orifice d'évacuation (2', 2a').

2. Dispositif selon la revendication 1, caractérisé par le fait que le mécanisme de transport (4, 4a, 4b) est relié à un mécanisme de levage (6, 6a, 6b) qui présente de préférence au moins un support (9, 10 ; 9a ; 10a ; 9b, 10b) sur lequel agissent un organe de levage (11, 11a, 11a' ; 11b ; 12, 12a, 12b), comme, p. ex., un vérin hydraulique-pneumatique, un disque excentrique, un levier coudé, une bielle ou un organe électromécanique.

3. Dispositif selon la revendication 2, caractérisé par le fait que le mécanisme de transport (4, 4a, 4b) est relié à un des supports (9, 10 ; 9a, 10a ; 9b, 10b) aux deux extrémités de son arbre (18, 18b, 19, 19b).

4. Dispositif selon la revendication 2 ou 3, caractérisé, d'une part, par le fait que le support (9, 10 ; 9a, 10a) est un bras pivotant qui est maintenu, à l'une de ses extrémités (13), dans une fixation (14), de préférence une fourche, lui permettant de pivoter, et, d'autre part, par le fait que l'autre extrémité (20) du bras pivotant (9, 9a ; 10, 10a) est logée dans un palier de fixation (41, 42) relié au fond de la trémie (3, 3a), lui permettant également de pivoter.

5. Dispositif selon la revendication 4, caractérisé par le fait que le bras pivotant (9, 9a) supporte à son extrémité opposée au fond de la trémie (3, 3a) un mécanisme d'entraînement (27) qui est relié à l'axe de la vis sans fin (18) par un organe d'entraînement (28).

6. Dispositif selon l'une des revendications 2 à 5, caractérisé par le fait que l'organe de levage (11, 11a) se trouve à une plus grande distance de l'axe d'une tige (39), permettant de fixer les autres extrémités (20) des supports dans des paliers de fixation (41 ; 42), que des extrémités d'arbre (18, 18b ; 19, 19b).

7. Dispositif selon la revendication 2, caractérisé par le fait que les supports (9b, 10b) se composent de coulisseaux mobiles dans le sens vertical, de préférence en forme de plaques, qui sont guidés sur des appuis verticaux (75, 76) par des paires de galets de roulement (54, 64, 59, 65, 60, 63), les axes des paires de galets de roulement étant perpendiculaires au sens de déplacement (P, P') du support (9b, 10b).

8. Dispositif selon la revendication 7, caractérisé par le fait que l'organe de levage (11b ; 12b) est articulé à une extrémité sur le support (9b, 10b) et à l'autre extrémité sur une base solidaire du fond de la trémie (3, 3a).

9. Dispositif selon l'une des revendications 1 à 8, caractérisé par le fait que le mécanisme de transport (4, 4a, 4b) peut être commandé automatiquement, p. ex. par une minuterie ou un circuit sur lequel influe la puissance électrique absorbée du moteur de commande du mécanisme de transport.

10. Disposition selon l'une des revendications 1 à 9, dont la trémie présente un agitateur rotatif autour de son axe, tel qu'une vis sans fin de déblayage, une fraise ou équivalent, caractérisé, d'une part, par le fait que le levage du mécanisme de transport (4, 4a, 4b) peut être commandé de manière à ce qu'il ne puisse être exécuté qu'à partir d'une position éloignée du bras (48) de l'agitateur et, d'autre part, par le fait que le mécanisme de transport (4, 4a, 4b) est relié, de préférence, à un verrouillage (49) destiné à interrompre le mouvement rotatif du bras de l'agitateur (48) lorsque le mécanisme de transport se trouve soulevé.

Fig. 1

0 141 155

Fig. 2

Fig. 3

Fig. 4

0 141 155

Fig. 5

Fig. 6

0 141 155

Fig. 7

Fig. 8

0 141 155